# EUROPÄISCHE PATENTSCHRIFT

(11) **EP 2 124 304 B1**
(45) Veröffentlichungstag und Bekanntmachung des Hinweises auf die Patenterteilung: **23.10.2013**
(21) Anmeldenummer: 09006741.4
(22) Anmeldetag: 19.05.2009
(51) Int. Cl.: H02B 1/28, H02B 13/055

(54) **Vorrichtung und Verfahren zum Betreiben elektrischer Geräte in einer explosionsgefährdeten Umgebung**
Method and device for operating electric devices in an environment with explosion risk
Dispositif et procédé de fonctionnement d'appareils électriques dans un environnement explosif

(30) Priorität: 23.05.2008 DE 102008024836
(43) Veröffentlichungstag der Anmeldung: 25.11.2009
(73) Patentinhaber: Gönnheimer Elektronic GmbH, 67433 Neustadt/Weinstrasse (DE)
(72) Erfinder: Gönnheimer, Hans Peter, Dipl.-Ing., 67434 Neustadt (DE); Gönnheimer, Christoph, Dr.-Ing., 67466 Lambrecht (DE)
(74) Vertreter: Patentanwälte Dr. Keller, Schwertfeger

(56) Entgegenhaltungen:
- DE-A1- 4 418 158
- DE-A1- 10 313 203

## Beschreibung

Die Erfindung betrifft eine Vorrichtung und ein Verfahren zum Betreiben elektrischer Geräte in einer explosionsgefährdeten Umgebung gemäß dem jeweiligen Oberbegriff der unabhängigen Patentansprüche 1 und 9.

Das Prinzip der Überdruckkapselung mit Zündschutzgas zum Betreiben elektrischer Geräte in einer explosionsgefährdeten Umgebung ist bekannt. Dabei wird ein Gehäuse unter ständigem Überdruck gegenüber der Umgebung gehalten, wodurch ein Eindringen explosiver Gasgemische ins Gehäuseinnere verhindert wird. Gemäß IEC 60079 ist in solchen Fällen vorgesehen, das Gehäuse während einer Spülphase frei von explosiven Gasen zu spülen, bevor in die Betriebsphase übergegangen wird. In der Betriebsphase können unterschiedliche Betriebsarten zur Anwendung kommen, beispielsweise die Betriebsart "Ausgleich von Leckverlusten", bei der bei geschlossenem Spülgasauslass lediglich der durch Leckagen verursachte Spülgasverlust ausgeglichen wird, oder die Betriebsart "Ständige Durchspülung", bei der eine Freisetzungsstelle für explosive Gase innerhalb des Gehäuses liegt, so dass mit Hilfe einer ständigen Durchspülung eine Verdünnung des explosiven Gases erfolgt.

Eine gattungsgemäße Vorrichtung und ein gattungsgemäßes Verfahren sind aus der DE 44 18 158 A1 bekannt. Dort ist eine Vorrichtung und ein Verfahren beschrieben, bei der das zu betreibende elektrische Gerät in einem Gehäuse angeordnet ist mit einem Spülgaseinlass, in den ein Proportionalventil eingesetzt, ist und einem Spülgasauslass, der eine Durchflussmesseinrichtung und ein Absperrventil aufweist. Zusätzlich ist eine Druckmesseinrichtung vorgesehen, mit der der Druck innerhalb des Gehäuses gemessen wird. Mittels einer übergeordneten Mess- und Steuereinrichtung wird die von der Durchflussmesseinrichtung ermittelte Durchflussrate im Spülgasauslass erfasst und darauf basierend die erforderliche Spülgasmenge ermittelt. Um dabei Spülgasverluste möglichst gering zu halten, ist auch schon der Gedanke offenbart, die erforderliche Spülgasmenge durch Integration der einzelnen Werte der Durchflussrate über die Zeit zu ermitteln. Zusätzlich wird vorgeschlagen, sowohl in der Spülphase als auch der Betriebsphase den Gehäusedruck über das Proportionalventil im Spülgaseinlass zu regulieren.

Mit dieser Vorrichtung und diesem Verfahren konnte ein beträchtlicher Fortschritt gegenüber dem damals bekannten Stand der Technik erreicht werden, der lediglich eine zeitabhängige Steuerung des Spülvorgangs bei Überschreiten eines Schwellendurchflusswerts im Spülgasauslass vorsah. So konnten erstmals deutliche Einsparungen bei der Spülgasmenge erzielt und übermäßige Druckbelastungen auf das Gehäuse während der Spülphase verringert werden.

Zeitlich später ist die DE 198 31 764 C1 einzuordnen, die eine ähnliche Vorrichtung betrifft mit einem Gehäuse, in dessen Einlass ein Proportionalventil eingesetzt ist. Der Spülgasauslass weist einen Durchflusswächter und ein nachgeschaltetes Absperrventil auf. Über eine Differenzdruckmesseinrichtung wird der Überdruck im Gehäuse gegenüber der Atmosphäre ermittelt. Mit Hilfe einer übergeordneten Steuereinheit ist vorgesehen, das Proportionalventil im Spülgaseinlass in Abhängigkeit von einem oberen und unteren Schwellenwert des Spülgasdurchflusses im Spülgasauslass zu regulieren. Auf diese Weise soll eine Minimierung der Spülgasmenge erreicht werden. Auch ist bereits die Reduzierung von unzulässigen Überdrücken im Gehäuse angesprochen.

Die DE 100 52 421 C1 offenbart ebenfalls eine Vorrichtung zur Überdruckkapselung elektrischer Geräte, wobei im Spülgaseinlass des Gehäuses ein Druckventil sitzt, über das das Gehäuseinnere mit Spülgas beaufschlagt wird. Im Spülgasauslass ist eine Drossel und ein nachgeordneter Durchflusswächter vorgesehen. Sinkt der Gehäuseinnendruck unter einen vorgegebenen Wert, so wird mit Hilfe eines Differenzdruckschalters ein Alarmsignal an eine Auswerteinrichtung gegeben. Entsprechendes gilt bei Unterschreiten eines vorgegeben Mindestdurchflusses, was vom Durchflusswächter erkannt und an die Auswerteinrichtung gemeldet wird. Der DE 100 52 421 C1 kann auch schon eine Ausführungsform entnommen werden, bei der im Spülgaseinlass ein Proportionalventil sitzt, das über eine Steuereinrichtung nachgestellt wird, sobald der Differenzdruckschalter oder der Durchflusswächter ein entsprechendes Signal geben. Bei dieser Ausführungsform wird die Vorrichtung im Störfall also nicht abgeschaltet, sondern es wird versucht, den Druckabfall im Gehäuse durch eine erhöhte Menge an Spülgas auszugleichen. Der Druck wird dabei gegenüber der Drossel im Spülgasauslass aufgebaut.

Zudem ist mit der DE 103 13 203 A1 eine Vorrichtung zum Betreiben elektrischer Geräte in einer explosionsgefährdeten Umgebung bekannt, bei der eine korrekte Durchspülung des Gehäuses während der Spülphase ohne Einsatz eines Durchflusswächters, also mit vermindertem technischen Aufwand, erreicht wird. Die Vorrichtung besitzt ein Gehäuse mit Spülgaseinlass und Spülgasauslass, wobei in letzteren ein Auslassventil integriert ist. Das Wesen der dortigen Erfindung besteht in einer Regulierung des Gehäuseinnendrucks mit Hilfe einer Druckmessvorrichtung und übergeordneten Mess- und Steuereinheit auf einen Wert, der über dem Öffnungsdruck des Auslassventils liegt. Damit ist auch ohne Durchflusswächter sicher gestellt, dass das Auslassventil während der Spülphase geöffnet ist und eine ausreichende Menge Spülgas das Gehäuse durchströmt.

Vor diesem Hintergrund liegt der Erfindung die Aufgabe zugrunde, bekannte Vorrichtungen im Hinblick auf deren sicheren und wirtschaftlichen Betrieb weiter zu entwickeln. Dabei soll eine möglichst weitgehende Anpassbarkeit der erfindungsgemäßen Vorrichtung und des Verfahrens an die besonderen Anforderungen eines jeden Einsatzzwecks gewährleistet sein.

Diese Aufgabe wird durch eine Vorrichtung mit den Merkmalen des Patentanspruchs 1 sowie einem Verfahren mit den Merkmalen des Patentanspruchs 9 gelöst.

Vorteilhafte Ausführungsformen ergeben sich aus den Unteransprüchen.

In ihrer einfachsten Ausführung besitzt die Erfindung einen einzigen Regelkreis, mit dem die das Gehäuse verlassende Durchflussmenge an Spülgas reguliert wird. Auf diese Weise entfällt die Überwindung eines Offnungswiderstands, der bei passiven Auslassventilen gemäß dem Stand der Technik überwunden werden musste, um einen vorbestimmten Durchflusswert zu erhalten. Ein erster Vorteil der Erfindung besteht daher darin, dass durch den Einsatz eines Proportionalventils die mit der Überwindung des Öffnungswiderstands verbundenen Druckspitzen und Druckschwankungen nicht mehr auftreten, was zu einem unerwünschten "Atmen" des Gehäuses führt. Aber auch während der Spülphase zeichnet sich ein Proportionalventil im Spülgasauslass durch seinen geringen Strömungswiderstand aus, was zu einer Beschleunigung des Spülvorgangs gegenüber passiven Auslassventilen führt.

Ein weiterer Vorteil des Regelns des Gehäusedrucks über das Proportionalventil im Spülgasauslass besteht darin, dass beim Abbau eines vorhandenen Gehäusedrucks, beispielsweise beim Übergang von der Spülphase in die Betriebsphase, überschüssige Gasmengen durch den Spülgasauslass abgeleitet werden. Diese Gasmengen werden somit der tatsächlichen Spülgasmenge zugerechnet und verkürzen den Spülvorgang zusätzlich. Erfindungsgemäße Vorrichtungen erreichen daher schneller ihre Betriebsbereitschaft.

Als besonders vorteilhaft erweist sich das Vorsehen eines zweiten Regelkreises, bei dem der Gehäusedruck auch über ein zusätzliches Proportionalventil im Spülgaseinlass regelbar ist. Durch das Zusammenwirken beider Regelkreise ist ein feines Abstimmen der Vorrichtung bzw. des Verfahrens an die Besonderheiten des jeweiligen Einsatzzwecks möglich, so dass ein breites Spektrum an möglichen Parametervorgaben zum Betreiben einer erfindungsgemäßen Vorrichtung sowohl für die Spülphase als auch die Betriebsphase umgesetzt werden kann. Dabei kann eine derartige Anpassung allein durch Programmierung der Mess- und Steuereinheit erfolgen, ohne dass es hierzu mechanischer Umbauten bedarf.

Die Kombination beider Regelkreise ermöglicht beispielsweise das Betreiben einer erfindungsgemäßen Vorrichtung in einer Betriebsart, bei der der Innendruck im Gehäuse konstant gehalten wird, wobei durch Ansteuerung beider Proportionalventile die Durchflussrate im Spülgasauslass variabel oder konstant gehalten werden kann oder auch Null betragen kann. Ein konstanter Gehäusedruck führt zu einer im Wesentlichen statischen Beanspruchung des Gehäuses. Im Gegensatz dazu bedingen Druckschwankungen ein Atmen des Gehäuses, was im Laufe der Zeit zur Materialermüdung führt und durch konstruktive Verstärkung des Gehäuses berücksichtigt werden muss.

Gleichzeitig sind unter Einhaltung des konstanten Gehäusedrucks und bei weit geöffneten Proportionalventilen im Spülgaseinlass und Spülgasauslass hohe Durchflussraten möglich, die zu einer Verkürzung der Spülphase und damit schnellen Betriebsbereitschaft der Vorrichtung führen.

Bei einer anderen Zielvorgabe, mit der eine möglichst kurze Spülzeit erreicht werden soll, kann gemäß der Erfindung die Spülphase auch bei einer von der Gehäusekonstruktion abhängigen maximal möglichen Überdruckbelastung stattfinden, um eine möglichst große Durchflussrate im Gehäuse zu erzeugen. Nach Beendigung der Spülphase kann dann durch entsprechende Steuerung der Proportionalventile der Druck auf den Sollbetriebsdruck der Betriebsphase zurückgenommen werden.

In vorteilhafter Weiterbildung der Erfindung ist der erste Regelkreis kompakt zu einer Baugruppe zusammengefasst und in den Spülgasauslass integriert. Auf diese Weise ist eine Ausrüstung oder Nachrüstung der unterschiedlichsten Gehäuse mit geringem Montageaufwand und geringem Platzerfordernis möglich.

Zur Sicherstellung einer ausreichenden Durchspülung des Gehäuses während der Spülphase ist es möglich, eine erfindungsgemäße Vorrichtung derart zu betreiben, dass die Durchflussrate im Spülgasauslass auf einen vorgeschriebenen Mindestwert hin überwacht wird und die Spülphase ansonsten nach Ablauf einer vorbestimmten Zeit beendet wird. Demgegenüber bevorzugt ist jedoch die kontinuierliche Erfassung der Durchflussrate und deren Integration in der übergeordneten Mess- und Steuereinheit um Spülgasverluste zu minimieren und die Zeit bis zur Erlangung der Betriebsbereitschaft zu verkürzen.

Die Erfindung wird nachstehend anhand eines in den Zeichnungen dargestellten Ausführungsbeispiels näher erläutert. Es zeigen
- Fig. 1: in schematischer Darstellung eine erfindungsgemäße Vorrichtung,
- Fig. 2: ein Druck-Zeit-Diagramm bzw. Durchfluss-Zeit-Diagramm einer ersten Ausführungsform der Erfindung und
- Fig. 3: ein Druck-Zeit-Diagramm bzw. Durchfluss-Zeit-Diagramm entsprechend einer weiteren Ausführungsform der Erfindung.

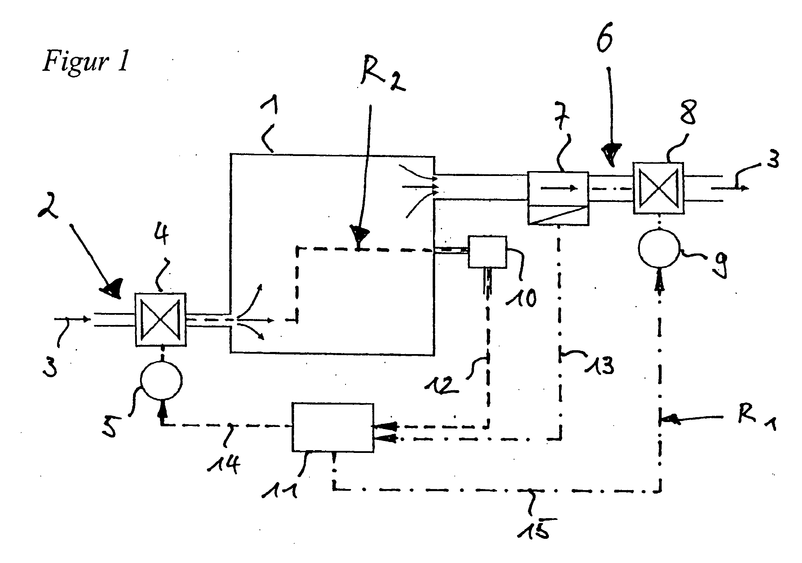

Fig. 1 zeigt in schematischer Darstellung eine erfindungsgemäße Vorrichtung. Man sieht ein Gehäuse 1, das in explosionsgefährdeter Umgebung angeordnet ist. Innerhalb des Gehäuses 1 befindet sich ein nicht dargestelltes elektrisches Gerät, das durch Überdruckkapselung von der explosionsgefährdeten Umgebung getrennt ist.

Zur Überdruckkapselung weist das Gehäuse 1 einen Spülgaseinlass 2 auf, durch welchen das Spülgas 3 unter Druck ins Innere des Gehäuses 1 gelangt. Um die Vorrichtung vor einem schädlichen Überdruck zu bewahren, kann im Spülgaseinlass 2 ein nicht dargestellter Druckminderer angeordnet sein. Vor seiner Mündung in das Gehäuse 1 ist in den Spülgaseinlass 2 ein Proportionalventil 4 integriert, das beispielsweise von einer verstellbaren Klappe, einem Schieber, einer Irisblende, einem Drehschieber oder einem Schlauchventil gebildet sein kann und mit Hilfe dessen die Durchflussrate im Spülgaseinlass 2 beliebig geregelt werden kann. Betätigt wird das Proportionalventil 4 mit Hilfe eines Aktors 5, der von einem Motor, beispielsweise einem Elektromotor, Schrittmotor, Piezomotor, aber auch einem hydraulischen oder pneumatischen Motor gebildet sein kann oder von Elektromagneten, Bimetallen, temperaturabhängigen längenveränderlichen Drähten sowie Pneumatik- oder Hydraulikzylindern und dergleichen.

Aus dem Gehäuse 1 führt ein Spülgasauslass 6, in welchen eine Durchflussmesseinrichtung 7 zur Ermittlung der momentanen Durchflussrate integriert ist. Stromabwärts der Durchflussmesseinrichtung 7 sieht man ein Proportionalventil 8, mit welchem sich die Durchflussrate im Spülgasauslass 6 regeln lässt. Angetrieben wird das Proportionalventil 8 von einem Aktor 9, der dem Aktor 5 im Spülgaseinlass 2 entsprechen kann.

Darüber hinaus besitzt eine erfindungsgemäße Vorrichtung eine Druckmesseinrichtung 10, mit der der Druck P im Gehäuse 1 mit dem Druck außerhalb des Gehäuses 1 verglichen wird, um durch Differenzbildung auf einfache Weise einen Überdruck oder Unterdruck im Gehäuse 1 feststellen zu können.

Schließlich umfasst die erfindungsgemäße Vorrichtung noch eine Mess- und Steuereinrichtung 11, zu der die Messdaten aus der Druckmesseinrichtung 10 über die Datenleitung 12 und die Messwerte aus der Durchflussmesseinrichtung 7 über die Datenleitung 13 gelangen und dort erfasst und verarbeitet werden. Die auf Basis dieser Messdaten gewonnenen Stellwerte werden über die Datenleitungen 14 an den Aktor 5 zum Regeln des Proportionalventils 4 im Spülgaseinlass 2 und über die Datenleitung 15 an den Aktor 9 zum Regeln des Proportionalventils 8 im Spülgasauslass 6 weitergeleitet.

Auf diese Weise bilden die Mess- und Steuereinrichtung 11 zusammen mit der Durchflussmesseinrichtung 7, dem Proportionalventil 8, dem Aktor 9 und den Datenleitungen 13 und 15 einen ersten Regelkreis R₁, der in Fig. 1 strichpunktiert dargestellt ist. Ein zweiter Regelkreis R₂ wird von der Mess- und Steuereinheit 11, dem Aktor 5, dem Proportionalventil 4, dem Gehäuse 1 und der Druckmesseinrichtung 10 einschließlich der dazugehörigen Datenleitungen 12 und 14 gebildet (strichlierte Darstellung).

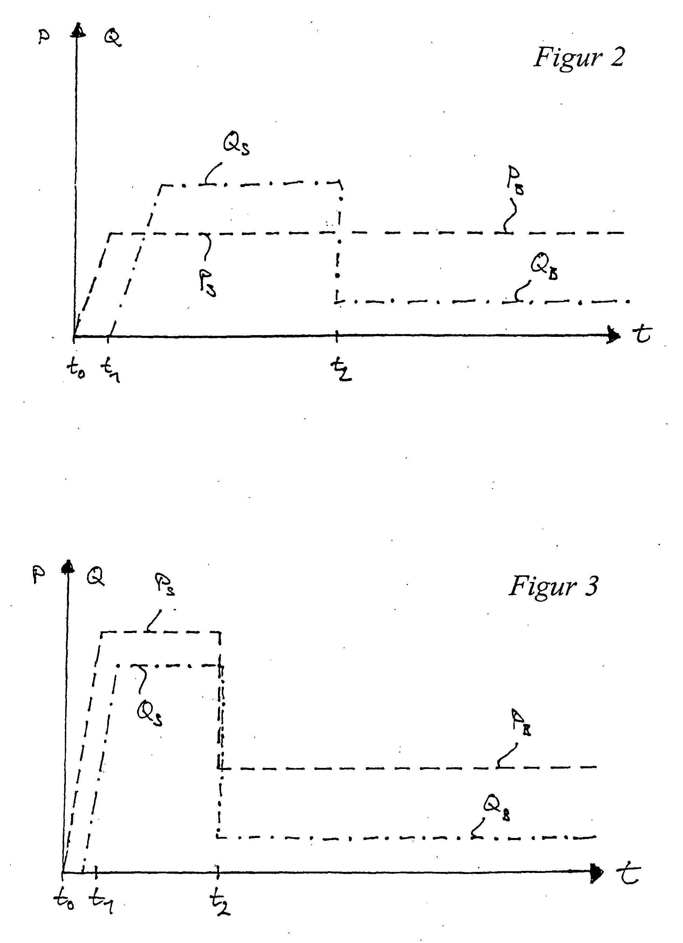

Die Fig. 2 und 3 zeigen den zeitlichen Verlauf des Gehäuseinnendrucks P und der Durchflussrate Q im Spülgasauslass 6 zweier möglicher Verfahren zum Betreiben einer erfindungsgemäßen Vorrichtung, wobei die Erfindung nicht auf diese beiden Ausführungsformen beschränkt ist. Die Abszisse stellt jeweils die Zeitkoordinate dar, bei der der Zeitpunkt t₀ den Beginn der Inbetriebnahme der Vorrichtung beschreibt, t₁ den Beginn der Spülphase und t₂ das Ende der Spülphase, das gleichzeitig den Beginn der Betriebsphase darstellt. An der Ordinate sind jeweils sowohl der Gehäuseinnendruck P als auch die Durchflussrate Q im Spülgasauslass 2 angetragen.

Fig. 2 betrifft eine besonders gehäuseschonende Betriebsart, bei der ein vorbestimmter Druck P innerhalb des Gehäuses 1 während der Spül- und Betriebsphase nicht überschritten wird. Zum Zeitpunkt t₀, also noch vor Beginn der Spülphase, wird bei zunächst geschlossenem Proportionalventil 8 und bei geöffnetem Proportionalventil 4 Spülgas 3 in das Innere des Gehäuses 1 geleitet, bis der gewünschte Druck P_{S} (Spülphase) bzw. P_{B} (Betriebsphase) innerhalb des Gehäuses erreicht ist und mit dessen Überschreiten das Öffnen des Proportionalventils 8 und damit der Spülvorgang beginnt. Dieser Druck P_{S} bzw. P_{B} wird sowohl in der Spülphase als auch in der Betriebsphase beibehalten.

Der mit dem Entweichen von Spülgas 3 aus dem Spülgasauslass 6 beginnende Druckverlust im Gehäuse 1 wird von der Druckmesseinrichtung 10 registriert und über die Datenleitung 12 an die Mess- und Steuereinrichtung 11 gemeldet. Zur Kompensation dieses Druckverlustes wird in der Mess- und Steuereinrichtung 11 eine Stellgröße errechnet, mit der der Aktor 5 das Proportionalventil 4 im Spülgaseinlass 2 so weit öffnet, dass das zusätzlich in das Gehäuse 1 einströmende Spülgas 3 den einsetzenden Druckverlust ausgleicht. Dieser Zustand wird so lange aufrecht erhalten, bis das Gehäuse 1 ausreichend gespült worden ist. Anschließend werden je nach gewünschter Betriebsart das Proportionalventil 8 im Spülgasauslass 6 vollständig geschlossen und über den zweiten Regelkreis R₂ lediglich Leckverluste unter Beibehaltung eines konstanten Drucks ausgeglichen (Betriebsart "Ausgleich der Leckverluste"). Bei der Betriebsart "Ständige Durchspülung" bleibt das Proportionalventil 8 hingegen leicht geöffnet, um einen konstanten Durchfluss im Gehäuse 1 zu erzielen, wobei der Druck im Gehäuse 1 wiederum über das Proportionalventil 4 auf einen gleichbleibenden Wert geregelt wird.

Der in Fig. 3 dargestellte Verlauf zeigt den Betrieb einer erfindungsgemäßen Vorrichtung, bei dem eine möglichst kurze Dauer der Spülphase im Vordergrund steht, wobei Druckunterschiede zwischen der Spülphase und der Betriebsphase in Kauf genommen werden. Bei wiederum geschlossenem Proportionalventil 8 im Spülgasauslass 6 wird durch Öffnen des Proportionalventils 4 im Spülgaseinlass 2 zunächst ein maximal möglicher Druck im Gehäuse 1 erzeugt. Mit Erreichen dieses Drucks oder bereits bei Überschreiten eines darunter liegenden Grenzdrucks wird das Proportionalventil 8 kontinuierlich geöffnet. Der damit einhergehende Druckverlust im Gehäuse 1 wird von der Druckmesseinrichtung 10 festgestellt und an die Mess- und Steuereinrichtung 11 gemeldet. Die Mess- und Steuereinrichtung 11 veranlasst daraufhin das Öffnen des Proportionalventils 4 im Spülgaseinlass 2, um den Druck auf dem vom Gehäuse maximal aufnehmbaren Niveau zu halten. Die durch den hohen Druck bedingten großen Durchflussraten Q_{S} führen zu einer vergleichsweise kurzen Dauer der Spülphase, so dass zum Zeitpunkt t₂ das Proportionalventil 8 geschlossen oder auf eine vorbestimmte Durchflussrate eingestellt wird. Gleichzeitig wird mit dem Regelkreis R₂ das Proportionalventil 4 im Spülgaseinlass 2 so geregelt, dass sich im Gehäuse 1 der gewünschte Betriebsdruck P_{B} einstellt.

Es versteht sich, dass die Erfindung nicht auf die beschriebenen Ausführungsbeispiele beschränkt ist, sondern ebenso Vorrichtungen und Verfahren zum Regeln erfindungsgemäßer Vorrichtungen umfasst, die sich dem Fachmann auf diesem Gebiet in Abhängigkeit der spezifischen Umstände und Erfordernisse des Einzelfalls mit Hilfe der vorstehenden Informationen ohne Weiteres erschließen, so zum Beispiel alle Variationen und Kombination der in den Figuren 2 und 3 beschriebenen Verfahren.

## Patentansprüche

1. Vorrichtung zum Betreiben elektrischer Geräte in einer explosionsgefährdeten Umgebung
- mit einem das elektrische Gerät aufnehmenden Gehäuse (1), das einen Spülgaseinlass (2) mit einem Einlassventil aufweist und das einen Spülgasauslass (6) mit einer Durchflussmesseinrichtung (7) zur Erfassung der aus dem Gehäuse (1) strömenden Spülgasmenge (3) sowie ein Auslassventil aufweist, wobei das Gehäuse (1) zur Überdruckkapselung über den Spülgaseinlass (2) mit einem Spülgas (3) beaufschlagbar ist, und
- mit einer Druckmesseinrichtung (10) zur Ermittlung des aktuellen Drucks (P) im Gehäuse (1) und
- mit einer übergeordneten Mess- und Steuereinrichtung (11) zur Erfassung und Verarbeitung der Messwerte und Ansteuerung des Einlassventils,
**dadurch gekennzeichnet, dass**
das Auslassventil im Spülgasauslass (6) von einem ersten Proportionalventil (8) gebildet ist und dass das erste Proportionalventil (8), die Durchflussmesseinrichtung (7) und die Mess- und Steuereinrichtung (11) einen ersten Regelkreis (R₁) zum Regeln der Durchflussrate (Q) im Spülgasauslass (6) bilden.

2. Vorrichtung nach Anspruch 1, **dadurch gekennzeichnet, dass** das Ventil im Spülgaseinlass (2) von einem zweiten Proportionalventil (4) gebildet ist, und dass das zweite Proportionalventil (4), die Druckmesseinrichtung (10) und die Mess- und Steuereinrichtung (11) einen zweiten Regelkreis (R₂) zum Regeln des Drucks (P) im Gehäuse (1) bilden.

3. Vorrichtung nach Anspruch 1 oder 2, **dadurch gekennzeichnet, dass** eines oder beide Proportionalventile (4, 8) als Klappe, Schieber, Irisblende, Drehschieber oder Schlauchventil ausgebildet sind.

4. Vorrichtung nach einem der Ansprüche 1 bis 3, **dadurch gekennzeichnet, dass** eines oder beide Proportionalventile (4, 8) von jeweils einem Aktor (5, 9) betätigt werden, vorzugsweise von einem pneumatisch, hydraulisch, elektrisch oder temperaturgesteuerten Aktor.

5. Vorrichtung nach Anspruch 4, **dadurch gekennzeichnet, dass** der Aktor (5, 9) einen Motor, einen Elektromagnet, einen längenveränderlichen Draht, ein Bimetall, ein Gedächtnismetall, ein membrangesteuertes Ventil oder eine Zylinderkolbeneinheit umfasst.

6. Vorrichtung nach einem der Ansprüche 1 bis 5, **dadurch gekennzeichnet, dass** das erste Proportionalventil (8) und die Mess- und Steuereinrichtung (11) zu einer kompakten Baugruppe zusammengefasst und in den Spülgasauslass (6) integriert sind.

7. Vorrichtung nach einem der Ansprüche 1 bis 6, **dadurch gekennzeichnet, dass** die Durchflussmesseinrichtung (7) geeignet ist, kontinuierlich die aktuelle Durchflussrate (Q) zu ermitteln.

8. Vorrichtung nach einem der Ansprüche 1 bis 7, **dadurch gekennzeichnet, dass** dem Einlassventil ein Druckminderer vorgeschaltet ist.

9. Verfahren zum Betreiben elektrischer Geräte in einer explosionsgefährdeten Umgebung, wobei das elektrische Gerät innerhalb eines überdruckgekapselten Gehäuses (1) angeordnet wird, das einen Spülgaseinlass (2) mit einem Einlassventil aufweist und das einen Spülgasauslass (6) mit einer Durchflussmesseinrichtung (7) zur Erfassung der aus dem Gehäuse (1) strömenden Spülgasmenge (3) sowie ein Auslassventil aufweist, wobei das Gehäuse (1) zur Überdruckkapselung über den Spülgaseinlass (2) mit einem Spülgas (3) beaufschlagt wird, und
- wobei mit einer Druckmesseinrichtung (10) der aktuelle Druck im Gehäuse (1) gemessen wird und
- wobei mit einer übergeordneten Mess- und Steuereinrichtung (11) die Messwerte erfasst und verarbeitet werden und das Einlassventil angesteuert wird, **gekennzeichnet durch** einen ersten Regelkreis (R₁), bei dem die Durchflussrate im Spülgasauslass (6) kontinuierlich geregelt wird.

10. Verfahren nach Anspruch 9, **gekennzeichnet durch** einen zweiten Regelkreis (R₂), bei dem der Druck (P) im Gehäuse (1) kontinuierlich geregelt wird.

11. Verfahren nach Anspruch 9 oder 10, **dadurch gekennzeichnet, dass** das Verfahren eine Spülphase und eine Betriebsphase aufweist und der Druck (P_{S}) in der Spülphase im wesentlichen dem Druck (P_{B}) in der Betriebsphase entspricht.

12. Verfahren nach Anspruch 11, **dadurch gekennzeichnet, dass** während der Spülphase
- das Proportionalventil (8) im Spülgasauslass (6) zunächst geschlossen ist und das Proportionalventil (4) im Spülgaseinlass (2) kontrolliert geöffnet wird, bis ein vorbestimmter Druck (P) im Gehäuse (1) erreicht ist,
- dann das Proportionalventil (8) im Spülgasauslass (6) kontrolliert geöffnet wird bis eine vorbestimmte Durchflussrate (Q) erreicht wird, wobei gleichzeitig das Proportionalventil (4) im Spülgaseinlass (2) weiter geöffnet wird um den vorbestimmten Druck (P) konstant zu halten und
- dann am Ende der Spülphase das Proportionalventil (8) im Spülgasauslass (6) geschlossen oder auf eine vorbestimmte Durchflussrate (Q) zur Verdünnung oder Kühlung eingestellt wird, wobei gleichzeitig das Proportionalventil (4) im Spülgaseinlass (2) kontrolliert auf den Ausgleich der Leckverluste und gegebenenfalls auf den Verdünnungsbeziehungsweise Kühlstrom unter Beibehaltung des Drucks im Gehäuse (1) eingestellt wird.

13. Verfahren nach Anspruch 12, **dadurch gekennzeichnet, dass** der vorbestimmte Druck (P_{S}) in der Spülphase dem Druck (P_{B}) in der Betriebsphase entspricht.

14. Verfahren nach Anspruch 9 oder 10, **dadurch gekennzeichnet, dass** das Verfahren eine Spülphase und eine Betriebsphase umfasst und der Druck (P_{S}) in der Spülphase über dem Druck (P_{B}) in der Betriebsphase liegt.

15. Verfahren nach Anspruch 14, **dadurch gekennzeichnet, dass** während der Spülphase
- das Proportionalventil (8) im Spülgasauslass (6) zunächst geschlossen ist und das Proportionalventil (4) im Spülgaseinlass (2) kontrolliert geöffnet wird, bis ein vorbestimmter Druck (P) im Gehäuse (1) erreicht ist,
- dann das Proportionalventil (8) im Spülgasauslass (6) kontrolliert geöffnet wird bis eine vorbestimmte Durchflussrate (Q) erreicht ist, wobei gleichzeitig das Proportionalventil (4) im Spülgaseinlass (2) weiter geöffnet wird, um den Druck (P_{S}) während der Spülphase weiter zu steigern oder aufrecht zu erhalten und
- dann am Ende der Spülphase das Proportionalventil (8) im Spülgasauslass (6) geschlossen oder auf eine vorbestimmte Durchflussrate (Q) zur Verdünnung oder Kühlung eingestellt wird, wobei gleichzeitig das Proportionalventil (4) im Spülgaseinlass (2) kontrolliert auf den Ausgleich der Leckverluste und gegebenenfalls zusätzlich auf den Verdünnungsbeziehungsweise Kühlstrom unter Reduzierung des Drucks (P) im Gehäuse (1) auf den Betriebsdruck (P_{B}) eingestellt wird.

16. Verfahren nach Anspruch 15, **dadurch gekennzeichnet, dass** das Proportionalventil (4) im Spülgaseinlass (2) bei einem dem Druck (P_{B}) in der Betriebsphase entsprechenden Druck (P) beginnt zu öffnen.

17. Verfahren nach einem der Ansprüche 9 bis 16, **dadurch gekennzeichnet, dass** die Dauer der Spülphase zeitabhängig unter Einhaltung eines Mindestdurchflussrate (Q) gesteuert wird.

18. Verfahren nach einem der Ansprüche 9 bis 16, **dadurch gekennzeichnet, dass** die Dauer der Spülphase mengenabhängig durch Integration der Messwerte der Durchflussmesseinrichtung (7) gesteuert wird.

## Claims

1. A device for operating electrical apparatus in a potentially explosive environment
- having a housing (1) accommodating the electrical apparatus, which housing (1) comprises a purge gas inlet (2) with an inlet valve and a purge gas outlet (6) with a flow meter (7) for recording the quantity of purge gas (3) flowing out of the housing (1) and an outlet valve, the housing (1) being pressurisable with a purge gas (3) via the purge gas inlet (2) to provide a pressurised enclosure, and
- having a pressure measuring instrument (10) for determining the current pressure (P) in the housing (1) and
- having a higher-level measuring and control device (11) for recording and processing the measured values and actuating the inlet valve,
**characterised in that**
the outlet valve in the purge gas inlet (6) is formed of a first proportional valve (8) and **in that** the first proportional valve (8), the flow meter (7) and the measuring and control device (11) form a first control loop (R₁) for controlling the flow rate (Q) in the purge gas outlet (6).

2. A device according to claim 1, **characterised in that** the valve in the purge gas inlet (2) is formed of a second proportional valve (4), and **in that** the second proportional valve (4), the pressure measuring instrument (10) and the measuring and control device (11) form a second control loop (R₂) for controlling the pressure (P) in the housing (1).

3. A device according to claim 1 or claim 2, **characterised in that** one or both proportional valves (4, 8) take the form of a butterfly valve, slide valve, iris diaphragm, rotary slide valve or pinch valve.

4. A device according to any one of claims 1 to 3, **characterised in that** one or both proportional valves (4, 8) are each actuated by an actuator (5, 9), preferably a pneumatically, hydraulically, electrically or temperature-controlled actuator.

5. A device according to claim 4, **characterised in that** the actuator (5, 9) comprises a motor, a solenoid, a variable length wire, a bimetal, a memory metal, a diaphragm-controlled valve or a cylinder and piston unit.

6. A device according to any one of claims 1 to 5, **characterised in that** the first proportional valve (8) and the measuring and control device (11) are combined into a compact assembly and incorporated into the purge gas inlet (6).

7. A device according to any one of claims 1 to 6, **characterised in that** the flow meter (7) is suitable for continuously determining the current flow rate (Q).

8. A device according to any one of claims 1 to 7, **characterised in that** a pressure reducer is connected upstream of the inlet valve.

9. A method of operating electrical apparatus in a potentially explosive environment, the electrical apparatus being arranged within a pressurised housing (1), which comprises a purge gas inlet (2) with an inlet valve and which comprises a purge gas outlet (6) with a flow meter (7) for recording the quantity of purge gas (3) flowing out of the housing (1) and an outlet valve, the housing (1) being pressurised by a purge gas (3) via the purge gas inlet (2) to provide a pressurised enclosure, and
- the current pressure in the housing (1) being measured with a pressure measuring instrument (10) and
- the measured values being recorded and processed and the inlet valve being actuated using a higher-level measuring and control device (11), **characterised by** a first control loop (R₁), in which the flow rate in the purge gas outlet (6) is continuously controlled.

10. A method according to claim 9, **characterised by** a second control loop (R₂), in which the pressure (P) in the housing (1) is continuously controlled.

11. A method according to claim 9 or claim 10, **characterised in that** the method comprises a purging phase and an operating phase and the pressure (P_{S}) in the purging phase corresponds substantially to the pressure (P_{B}) in the operating phase.

12. A method according to claim 11, **characterised in that** during the purging phase
- the proportional valve (8) in the purge gas outlet (6) is initially closed and the proportional valve (4) in the purge gas inlet (2) is opened in a controlled manner, until a predetermined pressure (P) is reached in the housing (1),
- then the proportional valve (8) in the purge gas outlet (6) is opened in a controlled manner until a predetermined flow rate (Q) is reached, the proportional valve (4) in the purge gas inlet (2) being opened further at the same time in order to keep the predetermined pressure (P) constant and
- then at the end of the purging phase the proportional valve (8) in the purge gas outlet (6) is closed or set to a predetermined flow rate (Q) for dilution or cooling, the proportional valve (4) in the purge gas inlet (2) at the same time being set in a controlled manner for leakage loss compensation and optionally for the dilution or cooling stream while maintaining the pressure in the housing (1).

13. A method according to claim 12, **characterised in that** the predetermined pressure (P_{S}) in the purging phase corresponds to the pressure (P_{B}) in the operating phase.

14. A method according to claim 9 or claim 10, **characterised in that** the method comprises a purging phase and an operating phase and the pressure (P_{S}) in the purging phase is above the pressure (P_{B}) in the operating phase.

15. A method according to claim 14, **characterised in that** during the purging phase
- the proportional valve (8) in the purge gas outlet (6) is initially closed and the proportional valve (4) in the purge gas inlet (2) is opened in a controlled manner, until a predetermined pressure (P) is reached in the housing (1),
- then the proportional valve (8) in the purge gas outlet (6) is opened in a controlled manner until a predetermined flow rate (Q) is reached, the proportional valve (4) in the purge gas outlet (2) at the same time being opened further to maintain or to increase the pressure (P_{S}) further during the purging phase and
then at the end of the purging phase the proportional valve (8) in the purge gas outlet (6) is closed or set to a predetermined flow rate (Q) for dilution or cooling, the proportional valve (4) in the purge gas outlet (2) at the same time being set in a controlled manner for leakage loss compensation and optionally also for the dilution or cooling stream while reducing the pressure (P) in the housing (1) to the operating pressure (P_{B}).

16. A method according to claim 15, **characterised in that** the proportional valve (4) in the purge gas inlet (2) begins to open at a pressure (P) corresponding to the pressure (P_{B}) in the operating phase.

17. A method according to any one of claims 9 to 16, **characterised in that** the duration of the purging phase is controlled in a time-dependent manner while maintaining a minimum flow rate (Q).

18. A method according to any one of claims 9 to 16, **characterised in that** the duration of the purging phase is controlled in a quantity-dependent manner by integration of the measured values from the flow meter (7).

## Revendications

1. Dispositif de fonctionnement d'appareils électriques dans un environnement présentant un risque d'explosion
- avec un boîtier (1) recevant l'appareil électrique, qui présente une entrée de gaz de purge (2) avec une soupape d'entrée et qui présente une sortie de gaz de purge (6) avec un dispositif de mesure de débit (7) pour détecter la quantité de gaz de purge (3) sortant du boîtier (1) ainsi qu'une soupape de sortie, le boîtier (1) pouvant être soumis, via l'entrée de gaz de purge (2), à un gaz de purge (3) pour une enveloppe à surpression, et
- avec un dispositif de mesure de pression (10) pour déterminer la pression actuelle (P) dans le boîtier (1) et
- avec un dispositif de mesure et de commande (11) supérieur pour détecter et traiter les valeurs mesurées et commander la soupape d'entrée,
**caractérisé en ce que**
le soupape de sortie dans la sortie de gaz de purge (6) est formé par une première soupape proportionnelle (8) et que la première soupape proportionnelle (8), le dispositif de mesure de débit (7) et le dispositif de mesure et de commande (11) forment un premier circuit de régulation (R₁) destiné à réguler le débit (Q) dans la sortie de gaz de purge (6).

2. Dispositif selon la revendication 1, **caractérisé en ce que** la soupape dans l'entrée de gaz de purge (2) est formée par une deuxième soupape proportionnelle (4) et que la deuxième soupape proportionnelle (4), le dispositif de mesure de pression (10) et le dispositif de mesure et de commande (11) forment un deuxième circuit de régulation (R₂) destiné à réguler la pression (P) dans le boîtier (1).

3. Dispositif selon la revendication 1 ou 2, **caractérisé en ce qu'**une ou les deux soupapes proportionnelles (4, 8) sont réalisées sous forme de clapet, tiroir, diaphragme à iris, vanne rotative ou valve de chambre à air.

4. Dispositif selon une des revendications 1 à 3, **caractérisé en ce qu'**une ou les deux soupapes proportionnelles (4, 8) sont actionnées par un actionneur (5, 9) respectif, de préférence par un actionneur à commande pneumatique, hydraulique, électrique ou par température.

5. Dispositif selon la revendication 4, **caractérisé en ce que** l'actionneur (5, 9) comprend un moteur, un électroaimant, un fil de longueur variable, un bilame, un métal à mémoire de forme, une soupape commandée par membrane ou une unité à cylindre et piston.

6. Dispositif selon une des revendications 1 à 5, **caractérisé en ce que** la première soupape proportionnelle (8) et le dispositif de mesure et de commande (11) sont regroupés en une unité compacte et intégrés dans la sortie de gaz de purge (6).

7. Dispositif selon une des revendications 1 à 6, **caractérisé en ce que** le dispositif de mesure de débit (7) est apte à déterminer en continu le débit actuel (Q).

8. Dispositif selon une des revendications 1 à 7, **caractérisé en ce qu'**un réducteur de pression est monté avant la soupape d'entrée.

9. Procédé de fonctionnement d'appareils électriques dans un environnement présentant un risque d'explosion, l'appareil électrique étant disposé à l'intérieur d'un boîtier (1) à enveloppe à surpression qui présente une entrée de gaz de purge (2) avec une soupape d'entrée et qui présente une sortie de gaz de purge (6) avec un dispositif de mesure de débit (7) pour détecter la quantité de gaz de purge (3) sortant du boîtier (1) ainsi qu'une soupape de sortie, le boîtier (1) étant soumis, via l'entrée de gaz de purge (2), à un gaz de purge (3) pour une enveloppe à surpression, et
- la pression actuelle dans le boîtier (1) étant mesurée avec un dispositif de mesure de pression (10) et
- les valeurs mesurées étant détectées et traitées et la soupape d'entrée commandée par un dispositif de mesure et de commande (11) supérieur, **caractérisé par** un premier circuit de régulation (R₁) avec lequel le débit dans la sortie de gaz de purge (6) est régulé en continu.

10. Procédé selon la revendication 9, **caractérisé par** un deuxième circuit de régulation (R₂) avec lequel la pression (P) dans le boîtier (1) est régulée en continu.

11. Procédé selon la revendication 9 ou 10, **caractérisé en ce que** le procédé présente une phase de purge et une phase de fonctionnement et la pression (P_{S}) dans la phase de purge correspond sensiblement à la pression (P_{B}) dans la phase de fonctionnement.

12. Procédé selon la revendication 11, **caractérisé en ce que** pendant la phase de purge
- la soupape proportionnelle (8) dans la sortie de gaz de purge (6) est d'abord fermée et la soupape proportionnelle (4) dans l'entrée de gaz de purge (2) est ouverte de façon contrôlée jusqu'à ce qu'une pression (P) prédéterminée soit atteinte dans le boîtier (1),
- puis la soupape proportionnelle (8) dans la sortie de gaz de purge (6) est ouverte de façon contrôlée jusqu'à ce qu'un débit (Q) prédéterminé soit atteint, la soupape proportionnelle (4) dans l'entrée de gaz de purge (2) étant toujours ouverte en même temps pour maintenir constante la pression (P) prédéterminée et
- ensuite, à la fin de la phase de purge, la soupape proportionnelle (8) dans la sortie de gaz de purge (6) est fermée ou réglée à un débit (Q) prédéterminé pour la dilution ou le refroidissement, la soupape proportionnelle (4) dans l'entrée de gaz de purge (2) étant en même temps réglée de façon contrôlée à la compensation des pertes de fuites et, le cas échéant, au courant de dilution ou de refroidissement en maintenant la pression dans le boîtier (1).

13. Procédé selon la revendication 12, **caractérisé en ce que** la pression (P_{S}) prédéterminée dans la phase de purge correspond à la pression (P_{B}) dans la phase de fonctionnement.

14. Procédé selon la revendication 9 ou 10, **caractérisé en ce que** le procédé comprend une phase de purge et une phase de fonctionnement et la pression (P_{S}) dans la phase de purge se situe au-dessus de la pression (P_{B}) dans la phase de fonctionnement.

15. Procédé selon la revendication 14, **caractérisé en ce que** pendant la phase de purge
- la soupape proportionnelle (8) dans la sortie de gaz de purge (6) est d'abord fermée et la soupape proportionnelle (4) dans l'entrée de gaz de purge (2) ouverte de façon contrôlée jusqu'à ce qu'une pression (P) prédéterminée soit atteinte dans le boîtier (1),
- puis la soupape proportionnelle (8) dans la sortie de gaz de purge (6) est ouverte de façon contrôlée jusqu'à ce qu'un débit (Q) prédéterminé soit atteint, la soupape proportionnelle (4) dans l'entrée de gaz de purge (2) étant toujours ouverte pour continuer à augmenter ou maintenir la pression (P_{S}) pendant la phase de purge et
- ensuite, à la fin de la phase de purge, la soupape proportionnelle (8) dans la sortie de gaz de purge (6) est fermée ou réglée à un débit (Q) prédéterminé pour la dilution ou le refroidissement, la soupape proportionnelle (4) dans l'entrée de gaz de purge (2) étant en même temps réglée de façon contrôlée à la compensation des pertes de fuites et, le cas échéant, en plus au courant de dilution ou de refroidissement en réduisant la pression (P) dans le boîtier (1) à la pression de fonctionnement (P_{B}).

16. Procédé selon la revendication 15, **caractérisé en ce que** la soupape proportionnelle (4) dans l'entrée de gaz de purge (2) commence à s'ouvrir à une pression (P) correspondant à la pression (P_{B}) dans la phase de fonctionnement.

17. Procédé selon une des revendications 9 à 16, **caractérisé en ce que** la durée de la phase de purge est commandée en fonction du temps en respectant un débit (Q) minimum.

18. Procédé selon une des revendications 9 à 16, **caractérisé en ce que** la durée de la phase de purge est commandée en fonction de la quantité par intégration des valeurs mesurées par le dispositif de mesure de débit (7).
